(19) Europäisches Patentamt
European Patent Office
Office européen des brevets

(11) **EP 1 606 564 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(21) Anmeldenummer: **04710330.4**

(22) Anmeldetag: **12.02.2004**

(51) Int Cl.:
***F24F 12/00*** *(2006.01)*

(86) Internationale Anmeldenummer:
**PCT/DE2004/000247**

(87) Internationale Veröffentlichungsnummer:
**WO 2004/072560 (26.08.2004 Gazette 2004/35)**

(54) **VERFAHREN UND VORRICHTUNG ZUR ENERGIERÜCKGEWINNUNG**

METHOD AND DEVICE FOR RECOVERING ENERGY

PROCEDE ET DISPOSITIF DE RECUPERATION D'ENERGIE

(84) Benannte Vertragsstaaten:
**AT BE BG CH CY CZ DE DK EE ES FI FR GB GR HU IE IT LI LU MC NL PT RO SE SI SK TR**

(30) Priorität: **14.02.2003 DE 10306474**
**16.02.2003 DE 10306546**
**21.05.2003 DE 10323287**

(43) Veröffentlichungstag der Anmeldung:
**21.12.2005 Patentblatt 2005/51**

(73) Patentinhaber: **Hombücher, Heinz-Dieter**
**63179 Obertshausen (DE)**

(72) Erfinder: **Hombücher, Heinz-Dieter**
**63179 Obertshausen (DE)**

(74) Vertreter: **Stahl, Dietmar**
**Dreieichstrasse 4**
**63179 Obertshausen (DE)**

(56) Entgegenhaltungen:
**EP-A- 0 676 594      DE-A- 19 827 511**
**DE-U- 29 706 131**

**Beschreibung**

Die Erfindung betrifft ein Verfahren zur Energierückgewinnung nach dem Oberbegriff des Anspruchs 1 und eine zugehörige Vorrichtung nach dem Oberbegriff des Anspruchs 10.

Wärmerückgewinnungssysteme, Anlagen mit rekuperativen und regenerativen Wärmeübertragern sowie Anlagen mit Zwischenmedium oder Wärmepumpen, werden in der Klima- und Lüftungstechnik zur Energierückgewinnung aus der Abluft bzw. Fortluft eingesetzt.

In der Literatur werden Wärmerückgewinnungssysteme vielfältig beschrieben. Derartige Systeme sind in der Lüftungstechnik bekannt und werden häufig angewandt. Hiermit lassen sich laut der Literatur so genannte Rückwärmzahlen von bis zu 0,8 erreichen.

In der Veröffentlichung "Recknagel, Sprenger, Schramek ; Taschenbuch für Heizung + Klimatechnik 01/02, Ausgabe 2001, Oldenbourg Industrieverlag München" werden auf den Seiten 1367 ff. verschiedene Techniken zur Wärmerückgewinnung beschrieben. Unter anderem wird hierbei auch ein System mit einer Wärmepumpe genannt.

Weitere Hinweise auf Systeme zur Wärmerückgewinnung in Lüftungsanlagen sind in der Veröffentlichung "Handbuch der Klimatechnik, 3. Auflage, Verlag C.F. Müller GmbH, Karlsruhe, Band 2; Berechnung und Regelung" auf den Seiten 115 ff. zu finden.

In den herkömmlichen Wärmerückgewinnungssystemen, in denen verschiedene Bauarten von Wärmetauschern verwendet werden, nimmt die Wärmeleistung linear mit der Temperaturdifferenz zwischen der Fortluft die von einer Lüftungsanlage abgegeben wird, und der Außenluft, die der Lüftungsanlage zugeführt wird, ab. Steigt also im Heizfall die Temperatur der Außenluft an, verringert sich die Temperaturdifferenz zwischen der Außenluft und dem mittels der Lüftungsanlage abzuführenden Abluftvolumenstrom. Es kann weniger Energie aus dem Abluftvolumenstrom aufgenommen werden und an die als Zuluftvolumenstrom zuzuführende Außenluft abgegeben werden. Die Außenluft muss deshalb anschließend mit einem Erhitzer nachgewärmt werden.

Im Kühlfall kann einem die Fortluft bildenden Abluftvolumenstrom aus dem gleichen Grund, also wegen des Absinkens der Temperatur der Außenluft, nur ein Anteil der Energie entnommen werden.

Die Außenluft muss also anschließend im Heizfall mit einem Erhitzer nachgewärmt werden oder im Kühlfall mit einem Kühler nachgekühlt werden.

Bekannt ist es auch die Kühlung mit integrierter Kühlung nach einem Wärmetauscher vorzunehmen oder die Heizung mit einer Wärmepumpe nachgeschaltet nach einem Wärmerohr durchzuführen. Beide genannten Systeme sind nur bedingt regelbar, z.B. durch Stufenschaltung, zu- und abschalten oder mittels drehzahlgeregelter Verdichter. Die Kühlung wird manchmal noch mit einer Heißgas-Bypass-Regelung angepasst. Dieses Verfahren wird auf Grund der damit verbundenen Energieverschwendung immer weniger angewendet.

Eine gleitende Regelung über die gesamte Breite der verschiedenen Außentemperaturen ist mit keinem der Systeme ohne Minderung der so genannten Leistungsziffer möglich. Variable Volumenströme, wie sie in modernen Klimaanlagen immer häufiger eingesetzt werden, können mit vorgenannten Systemen nicht gekühlt oder geheizt werden.

Mit den bis heute bekannten Systemen ist eine Umschaltung vom Kühl- zum Heizmodus und umgekehrt nicht effektiv bzw. nicht oder nur mit einem schlechteren Wirkungsgrad über Luftbeimischung regelbar.

Aus dem Dokument DE 9218937 U1 ist eine Einrichtung zur Klimagestaltung in Gebäuderäumen bekannt. Diese Einrichtung weist zwischen Zuluft- und Abluftvolumenstrom einen regenerativen Wärmeübertrager auf. Nach diesem Wärmeübertrager ist ein Verdampfer einer Wärmepumpe angeordnet. Im Abluftvolumenstrom ist ein weiterer regenerativer Wärmeübertrager und der Verflüssiger der Wärmepumpe angeordnet. Zur Erhöhung der Energieausbeute ist parallel zu dem die Gebäuderäume versorgenden Außenluftstrom ein zweiter Außenluftstrom vorgesehen. Der Verdampfer und der Verflüssiger der Wärmepumpe sind im jeweils anderen Außenluftstrom angeordnet, sodass mittels der Wärmepumpe Energie aus dem ersten Außenluftstrom in den zweiten Außenluftstrom übertragen werden kann.

Weiterhin ist aus der DE 19500527 A1 ein Klimagerät bekannt. Dieses Klimagerät weist einen Zuluft- und einen Abluftvolumenstrom auf, die beide über einen Wärmetauscher geführt werden. Dem Wärmetauscher sind im Zuluftvolumenstrom bzw. im Abluftvolumenstrom der Verdampfer bzw. Verflüssiger einer Wärmepumpe nachgeschaltet. Die Wärmepumpe ermöglicht nur für einen bestimmten Einsatzfall eine optimale Energierückgewinnung. Dieser leitet sich aus der Auslegung der Leistung der Wärmepumpe ab.

Weiterhin ist schließlich aus der DE 198 51 889 A1 eine Wärmepumpen-Klimaanlage mit Energierecycling bekannt. In der Klimaanlage sind die Zuluft und die Abluft über einen gemeinsamen Wärmetauscher geführt. In der Zuluft ist dem Wärmetauscher unter anderem ein weiterer in einem ersten Kopplungskreislauf mit einem Heißwasserspeicher gekoppelter Wärmetauscher nachgeschaltet. Der Heißwasserspeicher Ist In einem zweiten Kopplungskreislauf mit dem Verflüssiger einer Wärmepumpe gekoppelt. Der Verdampfer der Wärmepumpe kann mit einem Teilstrom der Abluft beaufschlagt werden. Weiterhin wird ein weiterer Teil der Abluft über den Wärmetauscher geleitet und ein weiterer, kleinerer Teil der Abluft der Zuluft beigemischt. Die Klimaanlage ist aufwändig gestaltet, schlecht regelbar und benötigt für den Kühlfall ein zusätzliches Kühlaggregat, das mittels eines weiteren Wärmetauschers in die Zuluft eingeschaltet werden muss.

Weiterhin ist aus der EP 0 676 594 A2 eine Wärmepumpen-Gebäudeheizungsanlage bekannt. Die Wärmepumpen-Gebäudeheizungsanlage weist einen Luft-Wärmetauscher für Außenluft auf. Sie versorgt das Gebäude über einen Wasserwärmetauscher mit temperierter Zuluft und weist eine Wärmepumpe auf, die einem ihrer Eingangsseite zugeführten Außenluftstrom Wärme entzieht und diese zur Aufheizung der Zuluft bereitstellt. Der Entlüftungsstrom wird dem Außenluftstrom vor dessen Durchtritt durch die Wärmepumpe zugemischt. Wärmetauscher und Wärmepumpe sind in getrennten Speicherkreisläufen mit einem Speicherbehälter verbunden.

Weiterhin ist in dem DE 297 06 131 U1 eine Wärmepumpen-Klimaanlage mit Wärmerückgewinnung beschrieben. Die Anlage weist eine Luft/Wasser-Wärmepumpe, einen Hochtemperaturzwischenspeicher, einen Heizwasservorratsspeicher, eine Kältemaschine, weitere Luftbehandlungsanlagen, wie einen Kreuzstrom-Wärmetauscher, Mischkammem, eine Zuluftleitung, eine Abluftleitung auf. Die Wärmepumpe ist mit ihrem Wärmepumpenkreislauf mit einem Niedertemperaturkreislauf gekoppelt, aus dem durch die Luft/Wasser- Wärmepumpe eine Wärmeenergiedifferenz als Heiz-Energie im Hochtemperaturkreislauf abgegeben wird. Der Heizwasservorratsspeicher ist über mehrere unabhängige Koppelungskreisläufe ungeregelt mit Wärmetauschern, der Wärmepumpe und einem Brauchwasserbehälter verbunden.

Aus dem beschriebenen Stand der Technik ergibt sich folglich für eine konventionelle Lüftungsanlage ein nicht unerheblicher gerätetechnischer Zusatzaufwand für die Erwärmung oder Nachkühlung des zu erzeugenden Zuluftvolumenstromes.

Aufgabe der Erfindung ist es daher, in einem Verfahren nach dem Oberbegriff des Anspruches 1 bzw. in einer Vorrichtung nach dem Oberbegriff des Anspruches 10 die genannten Nachteile zu vermeiden und die Ausbeute der Wärmerückgewinnung bei guter Regelbarkeit bedeutend zu steigern.

Die Lösung dieser Aufgabe gestaltet sich in einem Verfahren nach den kennzeichnenden Merkmalen des Anspruches 1 bzw. einer Vorrichtung nach den kennzeichnenden Merkmalen des Anspruches 10.

Die Erfindung besteht aus einer Kombination eines der bekannten Wärmerückgewinnungssysteme mit einem System aus einer Wärmepumpe, einem Speicherkreislauf und einem mit dem Speicherkreislauf gekoppelten Wärmetauscher, der dem Wärmerückgewinnungssystem im Zuluftvolumenstrom nachgeschaltet ist. Ein weiterer Wärmetauscher ist dem Wärmerückgewinnungssystern im Abluftvolumenstrom nachgeordnet. Die beiden Wärmetauscher sind mittels der Wärmepumpe gekoppelt, wobei außerdem auf der Seite der Zuluftbehandlung die Wärmepumpe mittels eines weiteren Wärmetauschers mit dem Speicherkreislauf, der mit einem Energiespeicher und einem Mischventil versehen ist, verbunden ist.

Durch das Zusammenwirken der genannten Bauelemente ist es möglich, die Wärmeübertragung zu regeln. Dies ist unter Anderem für die Begrenzung der Zulufttemperatur erforderlich.

Die Temperatur in der Kreislaufflüssigkeit im Speicherkreislauf wird so hoch angesetzt, dass für den Betrieb der Wärmepumpe eine ausreichend hohe Verflüssigungstemperatur erzielt wird. Dies wird berechnet nach den Angaben des Herstellers der Verdichter unter Berücksichtigung der Temperatur des Abluftvolumenstromes, der Bauart des dort angeordneten Wärmetauschers und der Verdampfungstemperatur. Ist zum Erreichen der mittleren Temperaturdifferenz im Wärmetauscher im Zuluftvolumenstrom eine höhere Temperatur in der Kreislaufflüssigkeit erforderlich, so wird die Temperatur zum Erreichen der notwendigen mittleren Temperaturdifferenz gewählt. Auf diese Weise wird stets eine optimale Leistungsziffer der Wärmepumpe erreicht, aber auch gewährleistet, dass der Wärmeaustausch im Wärmetauscher im Zuluftvolumenstrom möglich ist.

Die Zulufttemperatur wird über das Mischventil geregelt, das beispielsweise als 3-Wege-Ventil mit einem Regler und einem Motor ausgebildet sein kann. Im Heizfall wird beispielsweise bei Unterschreiten der geforderten Zulufttemperatur wird der Volumenstrom an Kreislaufflüssigkeit zum Wärmetauscher im Zuluftvolumenstrom vergrößert. Bei überschreiten der geforderten Zulufttemperatur wird hingegen der Volumenstrom an Kreislaufflüssigkeit zum Wärmetauscher im Zuluftvolumenstrom verringert.

Sollte der Abluftvolumenstrom aus irgend welchen Gründen kleiner werden, sinkt die Verdampfungstemperatur, da weniger Wärme angeliefert wird. Ein Absinken der Verdampfungstemperatur wird über einen Druckaufnehmer vor dem Verdichter festgestellt, alternativ über einen Temperaturfühler. Sinkt die Verdampfungstemperatur unter einen voreingestellten Wert schaltet der Regler den Verdichter aus. Der Zuluftvolumenstrom wird dann über die Wärmeenergie aus dem Energiespeicher erwärmt. Nach Ablauf der für den Verdichterstop erforderlichen Stillstandszeit schaltet der Verdichter wieder zu.

Wird die Wärmepumpe wegen Erreichen einer Maximaltemperatur in der Kreislaufflüssigkeit abgeschaltet, wird der Zuluftvolumenstrom mit Energie aus dem Energiespeicher geregelt durch das Mischventil auf konstanter Temperatur gehalten. Ist die Kreislaufflüssigkeit wieder abgekühlt, schaltet die Wärmepumpe erneut zu, um aus dem Abluftvolumenstrom wieder Energie in die Kreislaufflüssigkeit und den Energiespeicher zu übertragen.

Ein stetiges Ab- und Zuschalten erfolgt bei Wärmepumpen mit einem Verdichter. Leistungsfähigere Wärmepumpen sind mit mehren Verdichtern ausgerüstet. Sind in der Wärmepumpe mehrere Verdichter eingebaut, so erfolgt das Zu- und Abschalten der Verdichter in einer Folgeschaltung. Als Verdichter können auch drehzahlgeregelte Modelle eingesetzt werden. In diesem Fall kann der Energiespeicher etwas kleiner dimensioniert werden, was aber unter Umständen die Leistungsziffer vermindert.

Der Energiespeicher wird vom Inhalt so groß ausgelegt, dass das Zeitintervall für eine vollständige Umwälzung des Flüssigkeitsvolumens länger andauert als dies für die Stillstandzeit des kleinsten Verdichters der Wärmepumpe notwendig ist. Zur Vermeidung von turbulenten Strömungen im Energiespeicher kann der eintretende Volumenstrom der Kreislaufflüssigkeit vorzugsweise mit einem Düsenrohr in den Energiespeicher geführt. Damit wird eine günstige laminare Strömung im Energiespeicher bewirkt.

Der Abluftvolumenstrom wird aus Gründen möglichst großer Energiegewinnung so weit heruntergekühlt, wie dies für die Wärmeübertragung notwendig ist. Wenn Vereisung am Wärmetauscher im Abluftvolumenstrom nicht hinderlich ist, oder auf Grund der Abluftkondition keine Vereisung stattfindet, kann mit einer entsprechend leistungsstarken Wärmepumpe die gewünschte Zulufttemperatur nach dem Wärmetauscher im Zuluftvolumenstrom ohne weiteren Erhitzer erreicht werden.

Durch den Einsatz der Wärmepumpe und der für den Betrieb der Wärmepumpe benötigten elektrischen Leistungsaufnahme, ist es möglich, an die Außenluft mehr Energie zu übergeben als der Fortluft entnommen werden kann.

Mit der beschriebenen Erfindung, kann im Kühlfall die Außenluft zur Aufbereitung des Zuluftvolumenstromes gekühlt werden. Dies geschieht durch Umkehrung des Kältekreislaufes der Wärmepumpe. Auch hierbei ist die Einstellung einer konstanten Zulufttemperatur möglich.

Die mit der Erfindung erzielbaren Vorteile bestehen unter Anderem in den im Folgenden beschriebenen vorteilhaften Wirkungen:

1. Es wird eine extrem große Wärmerückgewinnung erzielt. Die mit dem Wärmerückgewinnungssystem erzielte Übertragungsleistung WRG, wird ergänzt durch das in der beschriebenen Kombination gestaltete Wärmepumpensystem. Es ist möglich, dem Abluftvolumenstrom mehr Energie zu entziehen als für die Erwärmung des Zuluftvolumenstromes notwendig ist. Die überschüssige Energie kann optional auch zur Brauchwassererwärmung genutzt werden, z. B. auch zum Heizen nach der adiabatischen Befeuchtung des Zuluftvolumenstromes.

Gegenüber anderen Wärmerückgewinnungssystemen kann, auf Grund des regelbaren Wärmerückgewinnungssystems, der Wert der Rückwärmzahl von 1 überschritten werden, wohingegen bei anderen, bekannten Wärmerückgewinnungssystemen maximal eine wirtschaftliche Rückwärmzahl von 0,8 erreicht wird.

Beispiel:

$$\Phi = \frac{t\,FO_{EIN} - t\,FO_{AU}}{t\,FO_{EIN} - t\,AU_{EIN}}.$$

Der Abluftvolumenstrom wird mit einem Kreislaufverbundsystem, mit einer Rückwärmzahl von 0,47, in Kombination mit dem Wärmepumpensystem, von 24°C bei 50% relativer Feuchte auf 6,8°C gekühlt:

$$h_{EIN} = 43,2$$

$$h_{AUS} = 21,6$$

$$\Delta h = 21,5$$

Die Außenluft tritt mit 10°C bei 70% relativer Feuchte ein. Der Zuluftvolumenstrom wird durch die Behandlung daraufhin in den Zustand mit 31°C bei 19% relativer Feuchte überführt:

$$h_{EIN} = 23,4$$

$$h_{AUS} = 43,7$$

$$\Delta h \quad = 21,5$$

Daraus folgt für den Wert der Rückwärmzahl:

$$\Phi = \frac{24°C \; - 6,8°C}{24°C \; - 10°C} = \underline{1,23}$$

2. In den überwiegenden Bedarfsfällen für den Heizfall wird eine weitere Erwärmung des Zuluftvolumenstromes ZU, mit einem zusätzlichen Erhitzer, nicht notwendig sein.

3. In den meisten Bedarfsfällen im Kühlfall kann die Außenluft AU so weit gekühlt werden, dass eine weitere Kühlung mit einem zusätzlichen Kühler nicht erforderlich wird. Der Kühler kann im Lüftungsgerät eingespart werden.

4. Die von dem Zuluftventilator aufgenommene Leistung an der Welle wird kleiner, weil durch den Wegfall des Luftkühlers die hierfür erforderliche dynamische Druckdifferenz entfällt.

5. Die Zuluftgeräte werden durch den Wegfall des Lufterhitzers kleiner und leichter.

6. Für die Zuluftkühlung und für die dezentrale Gebäudekühlung ist in den meisten Fällen keine weitere Kältemaschine mehr erforderlich.

7. Die Erfindung kann dezentral genutzt oder zentral in einer Luftbehandlungseinheit integriert werden.

8. Die Erfindung kann zentral für den parallelen Betrieb beispielsweise mehrerer Lüftungsanlagen eingesetzt werden.

Die Erfindung wird an Hand von schematischen Darstellungen der Anlagen und Verfahren als Beispiel dargestellt und wird im Folgenden näher beschrieben.

Hierin zeigen

Figur 1    ein Schema einer ersten Variante der Erfindung mit einem Energiespeicher,
Figur 2    ein Schema einer zweiten Variante der Erfindung mit zwei Energiespeichern,
Figur 3    ein Schema einer ersten Variante der Erfindung für die Anwendung bei parallelen Lüftungsanlagen und
Figur 4    ein Schema einer zweiten Variante der Erfindung für die Anwendung bei parallelen Lüftungsanlagen.

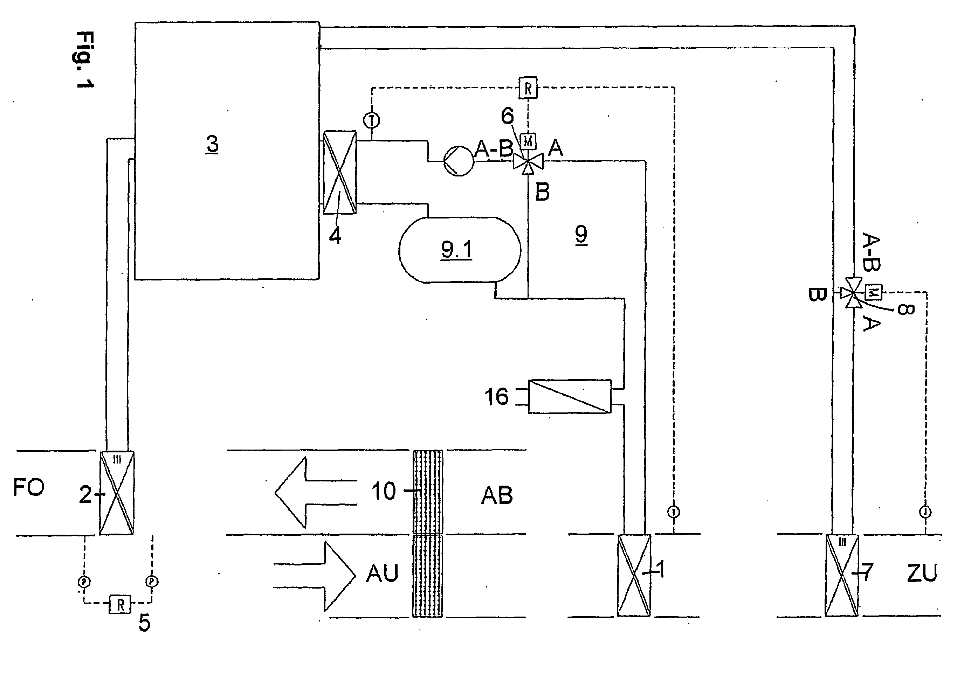

Nach der ersten Ausführungsform der Erfindung gemäß Figur 1 wird in einen Abluftvolumenstrom AB, der durch lüftungstechnische Behandlung zur Fortluft FO wird, nach einem Wärmerückgewinnungssystem 10 ein Wärmetauscher 2 platziert. Das Wärmerückgewinnungssystem 10 ist andererseits mit einem Zuluftvolumenstrom ZU gekoppelt, der durch lüftungstechnische Behandlung aus der Außenluft AU gewonnen wird. Das Wärmerückgewinnungssystem 10 kann nach einer der bekannten Bauarten z.B. als KVS (Kreislaufverbund)-System, Rotations- oder Plattenwärmetauscher, Glattrohrwärmeübertrager, Speichermassenwärmetauscher oder Wärmerohr ausgebildet sein. Der Wärmetauscher 2 ist mit einer Wärmepumpe 3 gekoppelt und wirkt im Heizfall als Verdampfer und im optionalen Kühlfall als Verflüssiger der Wärmepumpe 3.

Im Kältekreislauf der Wärmepumpe 3 ist ein weiterer Wärmetauscher 4 angeordnet, der im Heizfall als Verflüssiger und im Kühlfall als Verdampfer genutzt wird.

Weiterhin ist auch im Zuluftvolumenstrom ZU ein Wärmetauscher 1 dem Wärmerückgewinnungssystem 10 nachgeordnet. Der Wärmetauscher 1 ist in einen Speicherkreislauf 9 eingekoppelt. In diesem Speicherkreislauf 9 ist auch der mit der Wärmepumpe 3 gekoppelte Wärmetauscher 4 eingekoppelt. Weiterhin ist im Speicherkreislauf 9 ein Energiespeicher 9.1 vorgesehen. Der Speicherkreislauf 9 und der Energiespeicher 9.1 sind mit einer Wärme speichernden Kreislaufflüssigkeit gefüllt, die von einer Pumpe umgewälzt wird.

Die Kreislaufflüssigkeit für den Wärmetransport zwischen dem Wärmetauscher 1 und dem Wärmetauscher 4 kann Wasser, ein Wasser-Glykol-Gemisch oder eine sonstige in der Kälte- und Klimatechnik gebräuchliche Flüssigkeit sein.

Im Heizfall wird die Temperatur der Kreislaufflüssigkeit im Speicherkreislauf 9 so hoch gewählt, dass die minimal erforderliche Verflüssigungstemperatur für die Wärmepumpe 3 gewährleistet wird, aber auch die mittlere Temperaturdifferenz im Wärmetauscher 1 so groß ist, dass die Wärmeenergie an die Außenluft AU übertragen werden kann, die nach der beschriebenen lüftungstechnischen Behandlung den Zuluftvolumenstrom ZU bildet. Im optionalem Kühlfall wird die Temperatur der Kreislaufflüssigkeit im Speicherkreislauf 9 so klein gewählt, dass die Außenluft AU im Zuluftvolumenstrom ZU auf die gewünschte Zulufttemperatur gekühlt wird.

Das Temperaturniveau der Kreislaufflüssigkeit und damit die Regelung der Temperatur des Zuluftvolumenstromes ZU wird mit einem Mischventil 6 oder alternativ mit einer hydraulischen Weiche eingestellt. Das Mischventil 6 kann als 3-Wege-Ventil mit Regler und Motor ausgeführt sein.

Zur Regelung des Temperaturniveaus der Kreislaufflüssigkeit ist das Mischventil 6 in einer Verzweigung des Speicherkreislaufes 9 angeordnet, in der zwei Äste A und B des Speicherkreislaufes 9 zusammengeführt sind. Ein Ast A der Verzweigung ist als Rücklaufleitung direkt mit dem Wärmetauscher 1 verbunden. Ein zweiter Ast B ist mit der von dem Energiespeicher 9.1 kommenden Zuführleitung für den Wärmetauscher 1 verbunden. Durch Verstellung lässt das Mischventil 6 nun unterschiedliche Mengen an Kreislaufflüssigkeit durch die beiden Äste A und B strömen und bildet damit einen Mischstrom A-B. Auf diese Weise kann der Wärmedurchsatz am Wärmetauscher 1 von einem maximalen bis zu einem minimalen Niveau geregelt werden. Im maximalen Fall wird die Kreislaufflüssigkeit vollständig durch den Wärmetauscher 1 geführt und im minimalen Fall wird dem Wärmetauscher 1 keine Kreislaufflüssigkeit zugeführt. Der Energiespeicher 9.1, der dem Wärmetauscher 4 direkt nachgeordnet ist, wird immer von der gesamten Flüssigkeitsmenge durchströmt und nimmt dabei die von der Wärmepumpe 3 angelieferte, aber nicht vom Wärmetauscher 1 umgesetzte Wärmemenge auf. Ebenso kann beim Abschalten der Wärmepumpe 3 die Wärmeenergie aus dem Energiespeicher 9.1 über den Wärmetauscher 1 an den Zuluftvolumenstrom ZU abgegeben werden.

Sollte es im Wärmetauscher 2 zu störendem Eisansatz kommen, wird die Temperatur der Kreislaufflüssigkeit angehoben. Bei nicht akzeptabler Dicke des Eisansatzes wird der Kältekreis kurzfristig unterbrochen, sodass der Wärmetauscher 2 nicht von der Wärmepumpe gekühlt wird, und der Abluftvolumenstrom AB schmilzt den Eisansatz wieder ab. Alternativ kann an dieser Stelle auch eine separate Abtauheizung für den Wärmetauscher 2 eingesetzt werden. Ob Eisansatz vorhanden ist, kann z.B. über einen Differenzdruckmesser 5 am Abluftvolumenstrom (AB) vor und hinter dem Wärmetauscher 2 festgestellt werden. Alternativ kann der Eisansatz auch über den Anstieg des Luftdruckes im Abluftvolumenstrom AB vor dem Wärmetauscher 2 festgestellt werden.

Die Wärmepumpe 3 wird über in der Kältetechnik allgemein eingesetzte Temperaturfühler ein- und ausgeschaltet. Ist die Temperatur im Kältekreislauf der Wärmepumpe 3 zu hoch, werden die Verdichter ausgeschaltet, bzw. werden bei größeren, z.B. mehrstufigen Wärmepumpen die Verdichter in Abhängigkeit von den Temperaturen zu- oder abgeschaltet. Ebenfalls schalten die Verdichter ab, wenn im Kältekreislauf die zulässige Temperatur unterschritten wird.

Eine eventuell erforderliche zusätzliche Heizquelle kann ihre Energie über einen optionalen Wärmetauscher 16, der in die Zuführleitung zum Wärmetauscher 1 in den Speicherkreislauf 9 eingekoppelt ist, abgeben. Die Regelung der Übergabe dieser Wärmeenergie erfolgt auf einfache Weise mittels des Mischventiles 6.

In den Fällen des Umluftbetriebes, bei dem eine Wärmerückgewinnung nicht stattfindet, und auch im Nachheizbetrieb der Lüftungsanlage kann der Speicherkreislauf 9 auf zusätzliche Weise genutzt werden. Hierbei kann auf einfache Weise das PWW (Pumpenwarmwasser) der Heizungsanlage, das den Speicherkreislauf 9 über den Wärmetauscher 16 erwärmt, mit niedriger Vor- und Rücklauftemperatur betrieben werden. Dadurch wird wiederum der Einsatz der Brennwerttechnik als Heizsystem in der Lüftungstechnik ermöglicht. Dazu kann an den Wärmetauscher 16, beispielsweise wird ein Plattenwärmetauscher verwendet, vorzugsweise ein Brennwertkessel angeschlossen werden, der schon bei niedrigen Temperaturen sehr effektiv arbeitet.

Die optionale Funktion zur Kühlung der Außenluft AU für einen gekühlten Zuluftvolumenstrom ZU wird mit einer Umschaltung des Kältekreislaufes durch bekannte Einrichtungen an der Wärmepumpe 3 erreicht.

Für eine optionale Feuchteregelung des Zuluftvolumenstromes ZU im Kühlfall wird ein weiterer Wärmetauscher 7 nach dem Wärmetauscher 1 in den Zuluftvolumenstrom ZU platziert. Der Wärmetauscher 7 gibt über aus dem Kältemittel quasi kostenlos verfügbare Energie Wärme an den zuvor zur Entfeuchtung weiter herunter gekühlten Zuluftvolumenstrom ZU ab. Die Temperatur des Zuluftvolumenstromes ZU wird dabei mit einem Mischventil 8 geregelt.

Eine optionale Feuchteregelung des Zuluftvolumenstromes ZU im Heizfall ist hingegen mit dem Energiespeicher 9 gekoppelt und wird weiter unten im zweiten Ausführungsbeispiel beschrieben.

Zur Verbesserung der Wärmeabführung im Kühlfall kann im Abluftvolumenstrom AB eine Einrichtung zur adiabatischen Kühlung zwischen dem Wärmerückgewinnungssystem 10 und dem Wärmetauscher 2 der Wärmepumpe 3 vorgesehen werden. Damit wird der Wärmeübergang an dieser Stelle auf einfache Weise stark verbessert.

Zur Beeinflussung der Luftbehandlung können in den Kanälen zwischen Zuluftvolumenstrom ZU und Abluftvolumenstrom AB auf bekannte Weise Luftklappen für die Zuführung von Mischluft aus dem Abluftvolumenstrom AB zum Zuluftvolumenstrom ZU oder zur Durchführung eines Umluftbetriebes, wie oben genannt, vorgesehen werden.

Bei der Verwendung von Mischluft kann durch Erhöhung des Luftvolumenstromes über die Luftklappe mehr Wärmeenergie bei geringer Lufttemperatur vom Verflüssiger übernommen werden. Damit kann auch Kaltwasser für eine eventuelle dezentrale Kühlung erzeugt werden. Das Kaltwasser kann aus dem Energiespeicher 9.1 entnommen werden.

Die Verdampfungs- und Verflüssigungstemperatur kann alternativ auch über Druckaufnehmer geregelt werden.

In den Kältekreislauf kann zur Brauchwassererwärmung mit hohem Temperaturniveau ein zusätzlicher Erhitzer eingebaut werden.

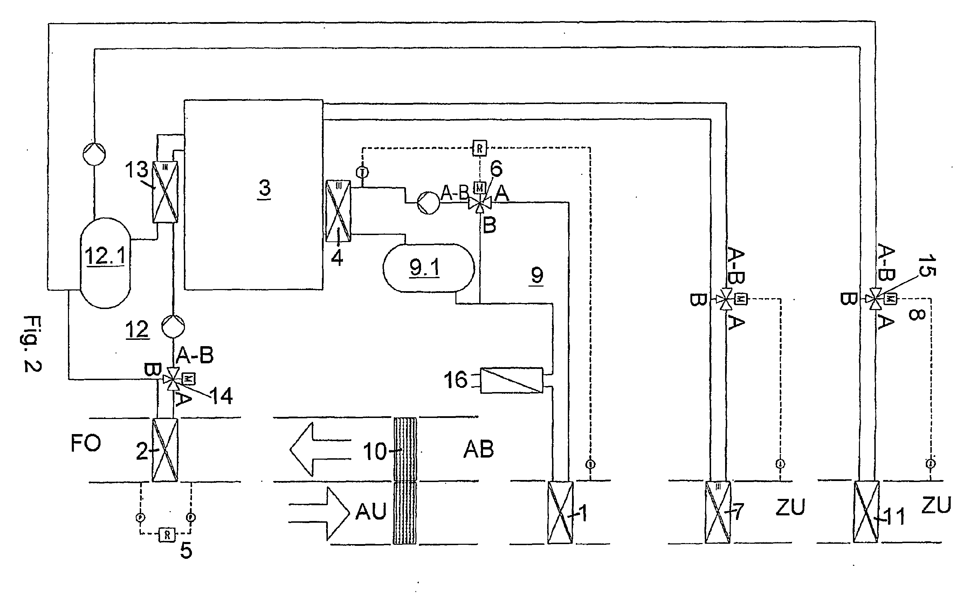

Eine zweite Ausführungsform der Erfindung dient der Verbesserung der Übertragung von Wärmeenergie bei variablen Volumenströmen der Zuluft und/oder der Abluft. Eine derartige Anlage für die Erzeugung von variablen Volumenströmen ist in Figur 2 dargestellt.

Die erfindungsgemäße Weiterentwicklung weist auf der Zuluftseite der Wärmepumpe 3 eine Anordnung des Speicherkreislaufes 9 mit dem Wärmetauscher 1, dem Wärmetauscher 4 und dem Energiespeicher 9.1 sowie dem Mischventil 6 zwischen den Ästen A und B des Speicherkreislaufes 9 auf, wie weiter oben sie unter Figur 1 beschrieben wurde.

In der Anordnung nach Figur 2 wird der Wärmetauscher 2 allerdings nicht von dem Kältemittel aus der Wärmepumpe 3 durchströmt. Hier wird der Wärmetauscher 2 als Flüssigkeit/Luft-Wärmetauscher eingesetzt. Der Wärmepumpe 3 ist auf der Abluftseite des Systems ein weiterer Speicherkreislauf 12 mit einem Energiespeicher 12.1 zugeordnet. Der Speicherkreislauf 12 wird mittels eines vierten Wärmetauschers 13 mit der Wärmepumpe gekoppelt. In diesem Fall wirkt der Wärmetauscher 13 wahlweise als Verdampfer oder Verflüssiger für die Wärmepumpe 3. Somit kann die Leistung des/der Verdichter der Wärmepumpe 3 im Kühlfall und im Heizfall voll ausgenutzt werden.

Der Speicherkreislauf 12 und der Energiespeicher 12.1 sind ebenso mit einer Wärme speichernden Kreislaufflüssigkeit gefüllt, die von einer Pumpe umgewälzt wird.

Die Regelung des Flüssigkeitsdurchsatzes im Speicherkreislauf 12 erfolgt mittels eines Mischventiles 14. Dem Mischventil 14 sind Äste A und B des Speicherkreislaufes 12 zugeordnet. Ein Ast A ist direkt als Rücklaufleitung mit dem Wärmetauscher 2 verbunden. Ein Ast B ist mit der von dem Energiespeicher 12.1 kommenden zum Wärmetauscher 2 führenden Zuführleitung verbunden. Durch Einstellung am Mischventil 14 kann der Durchfluss der Kreislaufflüssigkeit im Speicherkreislauf 12 von den Extremzuständen mit vollem Durchsatz durch den Wärmetauscher 2 bis zur Abschaltung des Wärmetauschers 2 geregelt werden. Der Energiespeicher 12.1 ist dem Wärmetauscher 13 direkt nachgeordnet und wird von der gesamten Flüssigkeitsmenge durchströmt.

Über die Kreislaufflüssigkeit wird die Wärmeenergie mittels des Wärmetauschers 2 an die Fortluft FO übertragen. Wenn der Differenzdruck auf Grund von Eisansatz am Wärmetauscher 2 einen vorbestimmten Wert überschreitet wird am Mischventil 14 der Durchfluss von Ast B nach A-B geöffnet und die von der Wärmepumpe 3 eventuell eingebrachte Wärmeenergie wird im Speicherkreislauf 12 zwischengespeichert. Hierbei ist der Wärmetauscher 2 stillgesetzt. Nach dem Abschmelzen des Eisansatzes im Wärmetauscher 2 und damit der Verringerung des Differenzdruckes öffnet das Mischventil 14 im Speicherkreislauf 12 den Ast von A nach A-B und die Wärmeenergie wird weiter über den Wärmetauscher 2 an den Abluftvolumenstrom AB und damit an die Fortluft FO übertragen.

Neben einer Feuchtigkeitsregelung für den Kühlfall (Sommer) wie im ersten Ausführungsbeispiel nach Figur 1 beschrieben, kann auch eine Feuchtigkeitsregelung für den Heizfall (Winter) vorgesehen werden. Dazu ist im Zuluftvolumenstrom ZU ein weiterer Wärmetauscher 11 angeordnet. Dieser ist mit dem Energiespeicher 12.1 des weiteren Speicherkreislaufes 12 verbunden und im Zuluftvolumenstrom ZU einer Befeuchtungseinrichtung nachgeordnet. Ein Mischventil 15 regelt die Durchsatzmenge und damit die endgültige Temperatur des Zuluftvolumenstromes ZU.

Die übertragene Energie wird in den Energiespeichern 9.1 und 12.1 gespeichert und kontinuierlich auch bei Stillstand der Verdichter an die Außenluft AU bzw. den Zuluftvolumenstrom ZU und den Abluftvolumenstrom AB bzw. die Fortluft FO übertragen. Insbesondere der Energiespeicher 9.1 kann hierbei direkt oder indirekt über den Speicherkreislauf 9 mit zusätzlichen Einrichtungen zur Wärmezufuhr oder -abfuhr verbunden werden, um seine Energiekapazität besser auszunutzen.

Eine eventuell erforderliche zusätzliche Heizquelle übergibt die Energie über den optionalen Wärmetauscher 16 an den Speicherkreislauf 9. Die Regelung der Übergabe dieser Wärmeenergie erfolgt mit dem Mischventil 6.

Wie bereits unter dem ersten Ausführungsbeispiel beschrieben kann die Anlage an dieser Stelle durch eine Heizeinrichtung nach der Brennwerttechnik ergänzt werden. Dies ist dann möglich, wenn die Lüftungsanlage im Umluftbetrieb oder im Nachheizbetrieb bei niedrigen Wassertemperaturen gefahren wird. Hierbei kann auf einfache Weise das Pumpenwarmwasser der Heizungsanlage, das den Speicherkreislauf 9 über den Wärmetauscher 16 erwärmt, mit niedriger Vor- und Rücklauftemperatur betrieben werden.

Die Erfindung kann auch in sehr vorteilhafter Weise genutzt werden, wenn eine Wärmepumpe verwendet wird, ohne dieser ein zusätzliches konventionelles erstes Wärmerückgewinnungssystem in der ersten Rückgewinnungsstufe zuzuordnen.

Die beschriebene Erfindung ist sowohl mit ein- als auch mit mehrstufigen Wärmepumpen betreibbar.

In den Lüftungskanälen können neben den beschriebenen notwendigen Elementen auch weitere Elemente zur Luftbehandlung wie Filter, Schalldämpfer oder Befeuchter in gewohnter Weise eingesetzt werden. Zur Steigerung der Leistungsziffer der Wärmepumpe 3 und zur vollen Wärmeabfuhr bei variablen Volumenströmen, kann auch die in der Klimatechnik übliche Beimischung von Außenluft zur Fortluft über eine Mischluftklappe erfolgen. Gleichfalls ist die Anlage, wie bereits weiter oben erwähnt für den Umluftbetrieb geeignet.

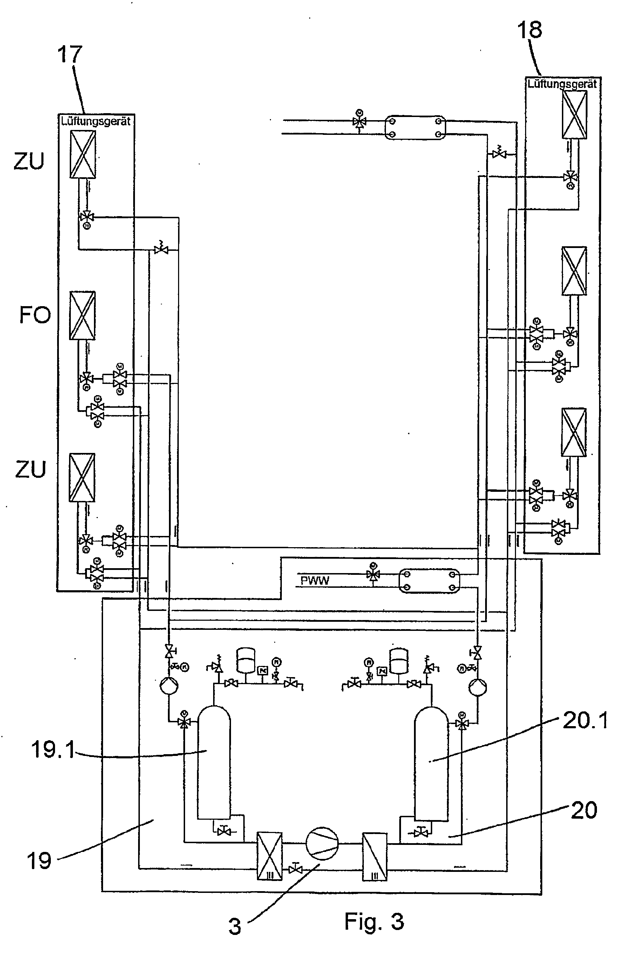

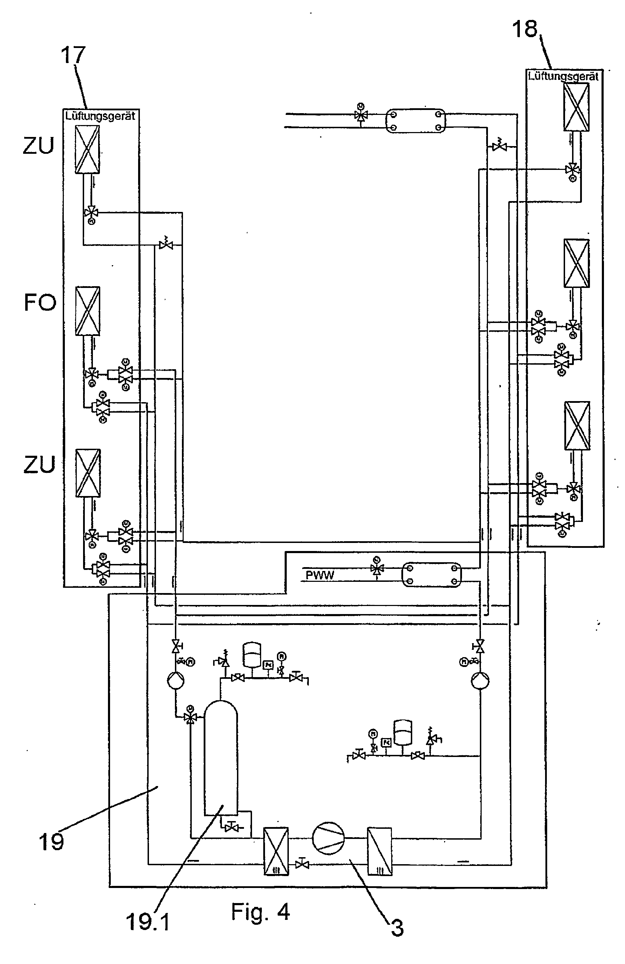

Wie in den Figuren 3 und 4 dargestellt, kann die Erfindung auch zum Betrieb von Kombinationsanlagen genutzt werden. Dabei wird eine Wärmepumpe 3 auf sehr rationelle Weise über den Speicherkreislauf bzw. die Speicherkreisläufe 19 bzw. 20 mit mehreren Lüftungssystemen 17, 18 verbunden.

In Figur 3 ist eine Anordnung mit zwei Speicherkreisläufen 19 bzw. 20 für zwei Lüftungsanlagen 17, 18 gezeigt. Diese Lüftungsanlagen 17, 18 können voneinander unabhängig im Kühl- und Heizbetrieb gefahren werden. Dazu wird jeweils ein Energiespeicher 19.1 bzw. 20.1 für den Kühlbetrieb und ein Energiespeicher 19.1 bzw. 20.1 für den Heizbetrieb verwendet.

In Figur 4 ist der Speicherkreislauf 19 auf einen einzigen Energiespeicher 19.1 reduziert. Diese Ausführungsform kommt dann zum Einsatz, wenn die Lüftungsanlagen 17, 18 generell nur im Heizbetrieb eingesetzt werden sollen.

Weiterhin kann die Erfindung auch genutzt werden, wenn die Wärmepumpe mit einem externen Verflüssiger bzw. Verdampfer betrieben wird. Dadurch lässt sich die Wirkung der Wärmepumpe in besonders vorteilhafter Weise unterstützen.

Die Erfindung ist in Verbindung mit Klimatisierungs- und Lüftungssystemen jeder Größenordnung einsetzbar, also beispielsweise auch für Hallenklimatisierungen oder Hallenheizungen.

Schließlich ist die Erfindung auch in sehr vorteilhafter Weise zur Nachrüstung von bestehenden Anlagen geeignet, da die Wärmepumpe mit dem Speicherkreislauf bzw. den Speicherkreisläufen als Baueinheit an vorhandenen Lüftungsanlagen ankoppelbar ist.

Bezugszeichenliste

| | |
|---|---|
| Zuluftvolumenstrom | ZU |
| Abluftvolumenstrom | AB |
| Fortluft | FO |
| Außenluft | AU |
| Ast | A |
| Ast | B |
| Ast | A-B |
| Wärmetauscher | 1 |
| Wärmetauscher | 2 |
| Wärmepumpe | 3 |
| Wärmetauscher | 4 |
| Differenzdruckmesser | 5 |
| Mischventil | 6 |
| Wärmetauscher | 7 |
| Steuerventil | 8 |
| Speicherkreislauf | 9 |
| Energiespeicher | 9.1 |
| Wärmerückgewinnungssystem | 10 |
| Wärmetauscher | 11 |
| Speicherkreislauf | 12 |
| Energiespeicher | 12.1 |
| Wärmetauscher | 13 |
| Mischventil | 14 |
| Steuerventil | 15 |
| Wärmetauscher | 16 |
| Lüftungsgerät | 17 |
| Lüftungsgerät | 18 |
| Speicherkreislauf | 19 |
| Energiespeicher | 19.1 |
| Speicherkreislauf | 20 |
| Energiespeicher | 20.1 |

**Patentansprüche**

1. Verfahren zur Energierückgewinnung in Anlagen der Klima- und Lüftungstechnik, mit einer Einrichtung zur Führung eines Zuluftvolumenstromes (ZU) und einer Einrichtung zur Führung eines Abluftvolumenstromes (AB), wahlweise mit einer Wärmepumpe (3), die zwischen dem Zuluftvolumenstrom (ZU) und dem Abluftvolumenstrom (AB) angeordnet ist oder mit einem den Zu- und den Abluftvolumenstrom zum Zweck der Wärmeübertragung zwischen dem Zu- und dem Abluftvolumenstrom verbindenden aus einem oder mehreren Wärmetauschern gebildeten Wärmerückgewinnungssystem (10), und mit einer Wärmepumpe (3), die zwischen dem Zuluftvolumenstrom (ZU) und dem Abluftvolumenstrom (AB) angeordnet und zum Zweck des ergänzenden Energietransports zwischen dem Zuluftvolumenstrom (ZU) und dem Abluftvolumenstrom (AB) dem Wärmerückgewinnungssystem (10) zugeordnet ist und wobei die Wärmepumpe (3) mittels Wärmetauschern mit dem Zuluftvolumenstrom (ZU) und/oder dem Abluftvolumenstrom (AB) gekoppelt ist, wobei ein Wärmeaustausch derart erfolgt,

- dass ein Austausch von Wärmeenergie in dem Abluftvolumenstromr (AB) oder in dem aus dem Wärmerückgewinnungssystem (10) austretenden Abluftvolumenstrom (AB) mittels eines mit der Wärmepumpe (3) gekoppelten ersten Wärmetauschers (2) erfolgt, und
- dass eine Übertragung der ausgetauschten Wärmeenergie mittels der Wärmepumpe (3) von einem zweiten mit der Wärmepumpe (3) gekoppelten Wärmetauscher (4) an einen Speicherkreislauf (9), welcher zur Übertragung von Wärmeenergie mit dem Wärmetauscher (4) gekoppelt ist und einen Speicherbehälter (9.1) enthält, erfolgt,
**gekennzeichnet dadurch,**
- **dass** die Übertragung der ausgetauschten Wärmeenergie mittels der Wärmepumpe (3) und einem zweiten mit der Wärmepumpe (3) gekoppelten Wärmetauscher (4) an einen einzigen Speicherkreislauf (9) erfolgt,
- **dass** eine gesteuerte Übertragung der an den Speicherkreislauf (9) übertragenen Wärmeenergie mittels eines dritten mit dem Speicherbehälter (9.1) und dem zweiten Wärmetauscher (4) verbundenen Wärmetauschers (1) an den, wahlweise an den Zuluftvolumenstrom (ZU) oder den aus dem Wärmerückgewinnungssystem (10) austretenden, Zuluftvolumenstrom (ZU) zwecks Kühlung oder Erwärmung des Zuluftvolumenstromes (ZU) erfolgt,
- indem die von der Wärmepumpe (3) kommende Wärmeenergie wahlweise an den Speicherbehälter (9.1) oder an den Speicherbehälter (9.1) und in regelbarem Verhältnis an den Wärmetauscher (1) übertragen wird.

2. Verfahren nach Anspruch 1, **gekennzeichnet durch**,

- Entnehmen von Wärmeenergie aus dem aus dem Wärmerückgewinnungssystem (10) austretenden Abluftvolumenstrom (AB) mittels des mit der Wärmepumpe (3) gekoppelten Wärmetauschers (2),
- Übertragen wenigstens eines Teiles der entnommenen Energie mittels der Wärmepumpe (3) und des in den Speicherkreislauf (9) eingekoppelten Wärmetauschers (4) in den Speicherkreislauf (9) bzw. den Energiespeicher (9.1), und
- Übertragen der aus dem Abluftvolumenstrom (AB) in den Speicherkreislauf (9) übertragenen Energie mittels des Wärmetauschers (1) zwecks Erwärmung an den aus dem Wärmerückgewinnungssystem (10) austretenden Zuluftvolumenstrom (ZU).

3. Verfahren nach Anspruch 1, **gekennzeichnet durch**,

- Entnahme von Wärmeenergie aus dem vom Wärmerückgewinnungssystem (10) kommenden Zuluftvolumenstrom (ZU) zwecks Kühlung des Zuluftvolumenstromes (ZU) mittels des mit dem Speicherkreislauf (9) gekoppelten Wärmetauschers (1),
- Entnehmen wenigstens eines Teiles der entnommenen Wärmeenergie mittels der Wärmepumpe (3) und des in den Speicherkreislauf (9) eingekoppelten Wärmetauschers (4) aus dem Speicherkreislauf (9), und
- Übertragen der aus dem Speicherkreislauf (9) entnommenen Wärmeenergie mittels der Wärmepumpe (3) und des Wärmetauschers (2) an den aus dem Wärmerückgewinnungssystem (10) austretenden Abluftvolumenstrom (AB).

4. Verfahren nach Anspruch 3, **gekennzeichnet durch**,

- Entnahme von Wärmeenergie aus dem aus dem Wärmerückgewinnungssystem (10) austretenden Abluftvolumenstrom (AB) zwecks Kühlung des Abluftvolumenstromes (AB) mittels einer adiabatischen Kühlung, und
- Zuführen des gekühlten Abluftvolumenstromes (AB) zum Wärmetauscher (2) zwecks Übertragen der aus dem Speicherkreislauf (9) entnommener Wärmeenergie an den gekühlten Abluftvolumenstrom (AB).

5. Verfahren nach Anspruch 3 oder 4, **gekennzeichnet durch**,

   - Zuführen von Wärmeenergie zu dem aus dem mit dem Speicherkreislauf (9) verbundenen Wärmetauscher (1) austretenden Zuluftvolumenstromes (ZU) zwecks Nacherhitzung zur Feuchteregelung des gekühlten Zuluftvolumenstromes (ZU) mittels eines mit vorzugsweise dem Heißgaskreislauf der Wärmepumpe (3) gekoppelten weiteren Wärmetauschers (7), und
   - Zuführen des erwärmten Zuluftvolumenstromes (AB) zu einem klimatisierten Raum.

6. Verfahren nach den Ansprüchen 1 bis 5, **gekennzeichnet durch**, Regelung des Anteils der übertragenen Wärmeenergie in dem dem Zuluftvolumenstrom (ZU) zugeordneten Wärmetauscher (1) **durch** Steuerung der Durchflussmenge einer im Speicherkreislauf (9) enthaltenen Kreislaufflüssigkeit durch den Energiespeicher (9.1) und den Wärmetauscher (1).

7. Verfahren nach einem der Ansprüche 1 bis 6, **gekennzeichnet durch**, eine variable Volumenstromregelung des Abluftvolumenstromes (AB) und/oder des Zuluftvolumenstromes (ZU) **durch** folgende Verfahrensschritte

   - Austausch von Wärmeenergie in dem aus dem Wärmerückgewinnungssystem (10) austretenden Abluftvolumenstrom (AB) mittels des Wärmetauschers (2) mit einem weiteren einen weiteren Energiespeicher (12.1) enthaltenden Speicherkreislauf (12),
   - Übertragen wenigstens eines Teiles der ausgetauschten Wärmeenergie mittels eines mit der Wärmepumpe (3) gekoppelten vierten Wärmetauschers (13) und der Wärmepumpe (3) aus dem weiteren Speicherkreislauf (12) über den mit dem den Energiespeicher (9.1) enthaltenden ersten Speicherkreislauf (9) gekoppelten Wärmetauscher (4) in den ersten Speicherkreislauf (9), und
   - Übertragen wenigstens eines Teiles der in den ersten Speicherkreislauf (9) übertragenen Wärmeenergie mittels des Wärmetauschers (1) an den aus dem Wärmerückgewinnungssystem (10) austretenden Zuluftvolumenstrom (ZU).

8. Verfahren nach Anspruch 7, **gekennzeichnet durch**, Regelung des Anteils der übertragenen Wärmeenergie in dem dem Abluftvolumenstrom (AB) zugeordneten Wärmetauscher (2) **durch** Steuerung der Durchflussmenge einer im Speicherkreislauf (12) enthaltenen Kreislaufflüssigkeit durch den Energiespeicher (12.1) und den Wärmetauscher (2).

9. Verfahren nach Anspruch 1 bis 8, **gekennzeichnet durch**, Energieübertragung mittels der Wärmepumpe (3) zwischen dem Zuluftvolumenstrom (ZU) und dem Abluftvolumenstrom (AB) ohne Verwendung des Wärmerückgewinnungssystemes (10).

10. Vorrichtung zur Energierückgewinnung in einer Anlage der Klima- und Lüftungstechnik, mit einem Zuluftvolumenstrom (ZU) und einem Abluftvolumenstrom (AB), wahlweise mit einem den Zuluft- (ZU) und den Abluftvolumenstrom (AB) zum Zweck der Wärmeübertragung zwischen dem Zuluft- (ZU) und dem Abluftvolumenstrom (AB) verbindenden Wärmerückgewinnungssystem (10), das einen regenerativen Wärmetauscher oder einen rekuperativen Wärmetauscher oder einen Speichermassenwärmetauscher oder ein Wärmerohr enthält, und mit einer Wärmepumpe (3), die zum Zweck des Energietransports zu dem Zuluftvolumenstrom (ZU) oder zu dem Abluftvolumenstrom (AB) dem Wärmerückgewinnungssystem (10) zugeordnet und mittels Wärmetauschern mit dem Zuluftvolumenstrom (ZU) und/oder dem Abluftvolumenstrom (AB) gekoppelt ist, oder einer Wärmepumpe (3), die ohne zusätzliches Wärmerückgewinnungssystem (10) mittels Wärmetauschern mit dem Zuluftvolumenstrom (ZU) und/oder dem Abluftvolumenstrom (AB) gekoppelt ist, und einem Speicherkreislauf (9) mit einem Speicherbehälter (9.1), wobei ein im Abluftvolumenstrom (AB) angeordneten Wärmetauscher (2) mit der Wärmepumpe (3) und die Wärmepumpe (3) mittels eines zweiten Wärmetauschers (4) mit dem Speicherkreislauf (9) gekoppelt ist, **gekennzeichnet dadurch, dass** ein einziger Speicherkreislauf (9) zwischen dem zweiten Wärmetauscher (4) der Wärmepumpe (3) und einem dritten im Zuluftvolumenstrom (ZU), wahlweise dem Wärmerückgewinnungssystem (10) nachgeordneten, Wärmetauscher (1) angeordnet ist, und dass der Speicherbehälter (9.1) dem Wärmetauscher (4) der Wärmepumpe (3) nach-geordnet und der Wärmetauscher (1) mit dem Speicherbehälter (9.1) und dem Wärmetauscher (4) der Wärmepumpe (3) verbunden ist, wobei eine Einrichtung zur Steuerung der Übertragung von Wärmeenergie in dem Speicherkreislauf (9) zwischen der Wärmepumpe (3) und dem Wärmetauscher (1) an den Speicherbehälter (9.1) oder an den Speicherbehäfter (9.1) und in regelbarem Verhältnis an den Wärmetauscher (1) vorgesehen ist.

**11.** Vorrichtung nach Anspruch 10, **gekennzeichnet durch**, einen im Abluftvolumenstrom (AB) angeordneten und mit der Wärmepumpe (3) gekoppelten Wärmetauscher (2), den mittels eines zweiten Wärmetauschers (4) mit der Wärmepumpe (3) gekoppelten Speicherkreislauf (9), einen in den Speicherkreislauf (9) eingekoppelten Energiespeicher (9.1), den mit dem Speicherkreislauf (9) gekoppelten Wärmetauscher (1), der in dem Zuluftvolumenstrom (ZU) angeordnet ist, und eine Einrichtung (6) zur Regelung der Zulufttemperatur des Zuluftvolumenstromes (ZU), welche den Durchfluss der Kreislaufflüssigkeit im Speicherkreislauf (9) **durch** den Wärmetauscher (1) und den Energiespeicher (9.1) steuert.

**12.** Vorrichtung nach Anspruch 11, **gekennzeichnet durch**, die Anordnung des ersten Wärmetauschers (2) als Verdampfer oder Verflüssiger der Wärmepumpe (3).

**13.** Vorrichtung nach Anspruch 11, **gekennzeichnet durch**, die Anordnung des zweiten Wärmetauschers (4) als Verflüssiger oder Verdampfer der Wärmepumpe (3).

**14.** Vorrichtung nach Anspruch 11 oder 13, **gekennzeichnet durch**, einen weiteren Speicherkreislauf (12), der über einen weiteren Wärmetauscher (13) mit der Wärmepumpe (3) gekoppelt ist, einen in den weiteren Speicherkreislauf (12) eingekoppelten weiteren Energiespeicher (12.1) und eine Einrichtung (14) zur Regelung der Abgabe von Wärmeenergie an den Abluftvolumenstrom (AB), die den Durchfluss der Kreislaufflüssigkeit im weiteren Speicherkreislauf (12) **durch** den Wärmetauscher (13) und den weiteren Energiespeicher (12.1) steuert, bei einer variablen Volumenstromregelung im Zuluft- (ZU) oder/und Abluftvolumenstrom (AB).

**15.** Vorrichtung nach Anspruch 14, **gekennzeichnet durch** die Anordnung des Wärmetauschers (13) als Verdampfer oder Verflüssiger der Wärmepumpe (3).

**16.** Vorrichtung nach Anspruch 10 bis 14, **dadurch gekennzeichnet, dass** die Wärmepumpe (3) umschaltbar ist.

**17.** Vorrichtung nach Anspruch 10 bis 16, **gekennzeichnet durch** eine Einrichtung zur adiabatischen Kühlung des Abluftvolumenstromes (AB) vor dem Eintritt in den Verflüssiger der Wärmepumpe (3) zur Verbesserung der Leistungsziffer im Fall der Kühlung des Zuluftvolumenstromes (ZU).

**18.** Vorrichtung nach Anspruch 10 bis 16, **gekennzeichnet durch** eine Einrichtung für die Nacherhitzung des aus dem Wärmetauscher (1) austretenden Zuluftvolumenstromes (ZU) zur Feuchteregelung des Zuluftvolumenstromes (ZU) mittels an einen im Zuluftvolumenstrom (ZU) angeordneten Wärmetauscher (7) zugeführter Wärmeenergie der Wärmepumpe (3), vorzugsweise aus dem Heißgas der Wärmepumpe (3).

**19.** Vorrichtung nach Anspruch 10 bis 18, **gekennzeichnet durch** eine Einrichtung für zusätzliche Heizung, wobei eine zusätzliche Heizanlage über einen separaten Wärmetauscher (16) in den Speicherkreislauf (9) eingekoppelt wird.

**20.** Vorrichtung nach Anspruch 19, **gekennzeichnet durch** die Verwendung einer Einrichtung nach der Brennwerttechnik als zusätzliche Heizanlage.

**21.** Vorrichtung nach einem oder allen der Ansprüche 10 bis 20, **gekennzeichnet durch** die Verwendung der Wärmepumpe (3) in der Verbindung des Zuluftvolumenstromes (ZU) und des Abluftvolumenstromes (AB) ohne Einsatz eines Wärmerückgewinnungssystemes (10).

**22.** Vorrichtung nach einem oder allen der Ansprüche 10 bis 21, **gekennzeichnet durch** die Zusammenfassung mehrerer Zu- und Ablüftungsgeräte (17, 18) zu einem einzigen Energierückgewinnungssystem, wobei nur eine Wärmepumpe (3) und nur ein Speicherkreislauf (19) mit einem Energiespeicher (19.1) vorgesehen ist.

**23.** Vorrichtung nach einem oder allen der Ansprüche 10 bis 21, **gekennzeichnet durch** die Zusammenfassung mehrerer Zu- und Ablüftungsgeräte (17, 18) zu einem einzigen Energierückgewinnungssystem, wobei nur eine Wärmepumpe (3) vorgesehen ist, die mit zwei oder mehreren Speicherkreisläufen (19, 20) mit jeweils einem Energiespeicher (19.1 bzw. 20.1) für Wärme und einem Energiespeicher (19.1 bzw. 20.1) für Kälte verbunden ist.

**24.** Vorrichtung nach einem oder allen der Ansprüche 14 bis 21, **gekennzeichnet durch** die Zusammenfassung mehrerer Zu- und Ablüftungsgeräte (17, 18) zu einem einzigen Energierückgewinnungssystem, wobei nur eine Wärmepumpe (3) vorgesehen ist, die mit zwei oder mehreren Speicherkreisläufen (19, 20) verbunden ist und in denen ein Energiespeicher (19.1 bzw. 20.1) für die Pufferung von Wärme oder Kälte vorgesehen ist.

**25.** Vorrichtung nach einem oder allen der Ansprüche 10 bis 24, **gekennzeichnet durch**, die Anordnung einer oder mehrerer von der Wärmepumpe (3) unabhängige Übergabestellen oder -einrichtungen für den Transport von Wärmeenergie am Speicherkreislauf (19) und/oder am Energiespeicher (19.1) und/oder am Speicherkreislauf (20) und/oder am Energiespeicher (20.1).

**26.** Vorrichtung nach einem oder allen der Ansprüche 10 bis 25, **gekennzeichnet durch** die Zuordnung eines externen Verflüssigers / Verdampfers zur Wärmepumpe (3).

## Claims

**1.** Method for energy recovery in installations for air conditioning and ventilation technology, with an device to guide a supply air flow (ZU) and an device to guide an exhaust air flow (AB), alternatively with a heat pump (3), that is arranged between the supply air flow (ZU) and the exhaust air flow (AB) or with a heat recovery system (10), which is consists of one or several heat exchangers, and which connects supply air flow (ZU) and the exhaust air flow (AB) for the purpose of the heat-transfer between the supply air flow (ZU) and the exhaust air flow (AB), and with a heat pump (3) arranged between the supply air flow (ZU) and the exhaust air flow (AB) for the purpose of the complementary energy transfer between the supply air flow (ZU) and the exhaust air flow (AB) whereby the heat pump (3) is attached to the heat recovery system (10), and where the heat pump (3), by means of heat exchangers is connected to the supply air flow (ZU) and/or the exhaust air flow (AB), whereby a heat-exchange takes place so,

- that an exchange of heat energy in the exhaust air flow (AB) or in the exhaust air flow (AB) leaving the heat recovery system (10) by means of a first heat exchanger (2) connected to the heat pump (3) is carried out, and
- that a transfer of the exchanged heat energy by means of the heat pump (3) from a second heat exchanger (4) connected to the heat pump (3) to a storage circuit (9), which for the transfer of heat energy is connected to the heat exchanger (4) and which contains a storage vessel (9.1), is carried out,
**characterized in,**
- **that** the transfer of the exchanged heat energy by means of the heat pump (3), and a second heat exchangers (4) connected to the heat pump (3) is carried out in one single storage circuit (9),
- **that** a controlled transfer of this transferred heat energy to the storage circuit (9) is carried out by means of a third heat exchanger (1) and the second heat exchanger (4), which are interconnected to the storage vessel (9.1), whereby the transfer is carried out alternatively to the supply air flow (ZU) or the supply air flow (ZU) leaving the heat recovery system (10) for the purpose of cooling or heating of the supply air flow (ZU),
- by transferring heat energy coming from the heat pump (3) alternatively to the storage vessel (9.1) or to the storage vessel (9.1) and in adjustable relationship to the heat exchanger (1).

**2.** Method according to claim 1, **characterized by**,

- taking heat energy from the exhaust air flow (AB) leaving the heat recovery system (10) by means of the heat exchanger (2) which is connected to the heat pump (3),
- transferring at least a part the taken energy into the storage circuit (9) or the energy storage (9.1) by means of the heat exchanger (4) which is connected to the heat pump (3) and integrated into the storage circuit (9), and
- transferring the energy which is transferred from the exhaust air flow (AB) into the storage circuit (9) by means of the heat exchanger (1) for the purpose of heating of the supply air flow (ZU) leaving the heat recovery system (10).

**3.** Method according to claim 1, **characterized by**,

- extraction of heat energy from the supply air flow (ZU) leaving the heat recovery system (10) for the purpose of cooling of the supply air flow (ZU) by means of the heat exchanger (1) connected to the storage circuit (9),
- extraction of at least a part the taken heat energy by means of the heat pump (3) and the heat exchanger (4) which connected into the storage circuit (9) from the storage circuit (9) and
- transferring of the heat energy taken from the storage circuit (9) by means of the heat pump (3) and the heat exchanger (2) to the exhaust air flow (AB) leaving the heat recovery system (10).

**4.** Method according to claim 3, **characterized by**,

- removal of heat energy from the exhaust air flow (AB) leaving the heat recovery system (10) for the purpose of cooling of the exhaust air flow (AB) by means of an adiabatic cooling, and
- supplying the cooled exhaust air flow (AB) to the heat exchanger (2) for the purpose of transferring the heat energy extracted from the storage circuit (9) to the cooled exhaust air flow (AB).

5. Method according to claims 3 or 4, **characterized by**,

- supplying of heat energy to the supply air flow (ZU) leaving the heat exchanger (1) which is connected to the storage circuit (9), for the purpose of post heating for humidity regulation of the cooled supply air flow (ZU) by means of a further heat exchanger (7) which preferably is connected to the hot-gas-circuit of the heat pump (3) and
- supplying the warmed up supply air flow (ZU) to an air conditioned area.

6. Method according to claims 1 to 5, **characterized by**,
regulation of the share of the transferred heat energy in the heat exchanger (1) which is connected to the supply air flow (ZU) by regulation of the flow quantity of a circulation liquid contained in the storage circuit (9) flowing through the energy-storage (9.1) and the heat exchanger (1).

7. Method according to claims 1 to 6, **characterized by** a variable regulation of the volume flow rate of the exhaust air flow (AB) and/or the supply air flow (ZU) by the following process steps

- exchanging of heat energy in the exhaust air flow (AB) leaving the heat recovery system (10) by means of the heat exchanger (2) with another storage circuit (12) containing another energy storage (12.1),
- transferring at least a part the exchanged heat energy into the first storage circuit (9) by means of a fourth heat exchanger (13) connected to the heat pump (3) and the heat pump (3) from the further storage circuit (12) by means of heat exchanger (4) which connects the energy storage (9.1) with the first storage circuit (9) and
- transferring at least a part of the heat energy which is transferred to the first storage circuit (9) by means of the heat exchanger (1) to the supply air flow (ZU) leaving the heat recovery system (10).

8. Method according to claim 7, **characterized by**,
regulation of the share of the transferred heat energy in the heat exchangers (2) which is arranged in the exhaust air flow (AB) by controlling of the flow quantity of a circulation liquid contained in the storage circuit (12) which flows through the energy storage (12.1) and the heat exchanger (2).

9. Method according to claims 1 to 8, **characterized by**,
transferring energy by means of the heat pump (3) between the supply air flow (ZU) and the exhaust air flow (AB) without application of the heat recovery system (10).

10. Device for energy recovery in an installation for air conditioning and ventilation technology, with a supply air flow (ZU) and an exhaust air flow (AB), alternatively with a heat recovery system (10) connecting the supply air flow (ZU) and the exhaust air flow (AB) for the purpose of the heat transfer between the supply air flow (ZU) and the exhaust air flow (AB),
which contains a regenerative heat exchanger or a recuperative heat exchanger or a storage-mass heat exchanger or a heat tube and with a heat pump (3) which is allocated at the heat recovery system (10) for the purpose of the energy transportation to the supply air flow (ZU) or to the exhaust air flow (AB) and which is connected by means of heat exchangers with the supply air flow (ZU) and/or the exhaust air flow (AB),
or which contains a heat pump (3) which is connected by means of heat exchangers to the supply air flow (ZU) and/or the exhaust air flow (AB) without additional heat recovery system (10) and a storage circuit (9) with a storage vessel (9.1), whereby a heat exchanger (2) which is arranged in the exhaust air flow (AB) is connected to the heat pump (3) and whereby the heat pump (3) is connected by means of a second heat exchanger (4) to the storage circuit (9,
**characterized by**,
that one single storage circuit (9) is arranged between the second heat exchanger (4) of the heat pump (3) and a third heat exchangers (1) which is arranged in the supply air flow (ZU) and which alternatively is arranged after the heat recovery system (10), and that the storage vessel (9.1) is arranged after the heat exchanger (4) of the heat pump (3) and that the heat exchanger (1) is connected to the storage vessel (9.1) and the heat exchanger (4) of the heat pump (3), where an equipment is arranged for controlling of the transfer of heat energy in the storage circuit (9) between the heat pump (3) and the heat exchanger (1) to the storage vessel (9.1) or at the storage vessel (9.1) and in adjustable relationship to the heat exchanger (1).

11. Device according to claim 10, **characterized by**, one heat exchanger (2) which is arranged in the exhaust air flow (AB) and connected to the heat pump (3), the storage circuit (9) which is connected to the heat pump (3) by means of a second heat exchanger (4), one energy storage (9.1) which is coupled into the storage circuit (9), the heat exchanger (1) which is connected to the storage circuit (9), whereby the heat exchanger (1) is arranged in the supply air flow (ZU) and an equipment (6) for regulation of the temperature of the supply air in the supply air flow (ZU), which controls the flow of the circulation liquid in the storage circuit (9) through the heat exchanger (1) and the energy storage (9.1).

12. Device according to claim 11, **characterized by** the arrangement of the first heat exchanger (2) as vaporizer or condenser of the heat pump (3).

13. Device according to claim 11, **characterized by** the arrangement of the second heat exchanger (4) as condenser or vaporizer of the heat pump (3).

14. Device according to claims 11 or 13, **characterized by** another storage circuit (12) which is connected to the heat pump (3) by means of another heat exchanger (13), another energy-storage (12.1) which is coupled into the further storage circuit (12) and an equipment (14) for regulation of the delivery of heat energy to the exhaust air flow (AB), which controls the flow of the circulation liquid in the further storage circuit (12) by means of the heat exchanger (13) and the further energy storage (12.1), which is carried out at a variable volume rate regulation in the supply air flow (ZU) or/and in the exhaust air flow (AB).

15. Device according to claim 14, **characterized by** the arrangement of the heat exchanger (13), as vaporizer or condenser of the heat pump (3).

16. Device according to claims 10 to 14, **characterized by**, that the heat pump (3) is reversible.

17. Device according to claims 10 to 16, **characterized by** an equipment for adiabatic cooling of the exhaust air flow (AB) before entering the condenser of the heat pump (3) to the improvement of the performance digit in the case of cooling of the supply air flow (ZU).

18. Device according to claims 10 to 16, **characterized by** an equipment for post heating the supply air flow (ZU) leaving the heat exchanger (1) for humidity regulation of the supply air flow (ZU) by means of heat energy supplied to a heat exchanger (7) which is arranged in the supply air flow (ZU) of the heat pump (3), preferably out of the hot gas of the heat pump (3).

19. Device according to claims 10 to 18, **characterized by** an equipment for additional heating, where an additional heating system is coupled into the storage circuit (9) by means of a separated heat exchanger (16).

20. Device according to claims 19, **characterized by** disposition of an equipment corresponding to the condensing boiler technology as additional heating system.

21. Device according to claims 10 to 20, **characterized by** disposition of the heat pump (3) in the connection of the supply air flow (ZU) and the exhaust air flow (AB) without use of a heat recovery system (10).

22. Device according to claims 10 to 21, **characterized by** the aggregation of several supply and removal ventilation devices (17, 18) to one single energy recovery system, where only one heat pump (3) and only one storage circuit (19) with one energy storage (19.1) is arranged.

23. Device according to claims 10 to 21, **characterized by** the aggregation of several supply and removal ventilation devices (17, 18) to one single energy recovery-system, where only one heat pump (3) is arranged, which is connected to two or several storage circuits (19, 20), where each is connected one energy storage (19.1 or 20.1) for heat and an energy storage (19.1 or 20.1) for cooling energy.

24. Device according to claims 14 to 21, **characterized by** the aggregation of several supply and removal ventilation devices (17, 18) to one single energy recovery-system, where only one heat pump (3) is arranged, which is connected to two or several storage circuits (19, 20) in which an energy storage (19.1 or 20.1) provided for buffering of heat or cooling energy.

**25.** Device according to claims 10 to 24, **characterized by** the arrangement of one or several transfer locations or transfer equipments for the transportation of heat energy which are independent of the heat pump (3) and which are arranged at the storage circuit (19) and/or at the energy-storage (19.1) and/or at the storage circuit (20) and/or at the energy-storage (20.1).

**26.** Device according to claims 10 to 25, **characterized by** the arrangement of an external condenser / vaporizer to the heat pump (3).

**Revendications**

**1.** Méthode pour la récupération d'énergie dans des installations du climatisation et de la technique d'aération, avec un dispositif pour le guidage d'un flux volumique d'air frais (ZU) et un dispositif pour le guidage d'un flux volumique d'air repris (AB), au choix avec un système de récupération d'énergie (10), qui se forme d'un ou de plusieurs échangeurs d'énergie, qui connecte entre le flux volumique d'air frais et celui-là d'air repris en vue de la transmission de chaleur entre le flux volumique d'air frais et celui-là d'air repris et/ou avec une thermopompe (3), qui se trouve entre le flux volumique d'air frais (ZU) et le flux volumique d'air repris (AB) en vue du transport de l'énergie complémentaire et/ou qui est attribué au système de récupération de chaleur entre le flux volumique d'air frais (ZU) et le flux volumique d'air repris (AB), et est couplé avec le flux volumique d'air frais (ZU) et le flux volumique d'air repris (AB) au moyen des échangeurs de chaleur,
**caractérisé par**

- l'échange d'énergie thermique dans le flux volumique d'air repris (AB), qui sort du système de récupération de chaleur (10) au moyen d'un premier échangeur de chaleur (2) couplé avec la thermopompe (3),
- la transmission d'énergie thermique échangée à un circuit de la mémoire (9), qui est couplé à l'échangeur de chaleur (4) pour la transmission de l'énergie thermique et qui comporte un accumulateur d'énergie, au moyen d'une thermopompe (3) et un deuxième échangeur de chaleur (4) couplé avec la thermopompe (3), et
- la transmission d'énergie thermique transmet à l'accumulateur d'énergie au flux volumique d'air frais (ZU) échappant du système de récupération de chaleur au moyen d'un troisième échangeur de chaleur (1) en vue de refroidissement ou de réchauffage du flux volumique d'air frais (ZU).

**2.** Méthode selon la revendication 1, **caractérisée par**

- la reprise d'énergie thermique du flux volumique d'air repris (AB) sortant du système de récupération de chaleur (10) au moyen de l'échangeur de chaleur (2) couplé avec la thermopompe (3),
- la transmission d'une partie de l'énergie extraite du moins dans le circuit de la mémoire (9) respectivement l'accumulateur d'énergie (9.1), au moyen de la thermopompe (3) et l'échangeur de chaleur (4) couplée dans le circuit de la mémoire (9) et
- la transmission de l'énergie transmet du flux volumique d'air repris (AB) au circuit de la mémoire (9) au moyen de l'échangeur thermique (1) en vue d'échauffer le flux volumique d'air frais (ZU) sortant du système de récupération d'énergie (10).

**3.** Méthode selon la revendication 1, **caractérisée par**

- la reprise d'énergie thermique du flux volumique d'air frais sortant du système de récupération d'énergie (10), en vue de refroidir le flux volumique d'air frais (ZU) au moyen d'échangeur de chaleur (1) couplé avec le circuit de la mémoire (9),
- la reprise d'une partie de l'énergie extraite du moins au moyen de la thermopompe (3) et l'échangeur de chaleur (4) couplée dans le circuit de la mémoire (9), et
- la transmission de l'énergie thermique repris du circuit de la mémoire (9) par la thermopompe (3) et l'échangeur de chaleur (2) au flux volumique d'air repris (AB) sortant du système de récupération d'énergie (10).

**4.** Méthode selon la revendication 3, **caractérisée par**

- la reprise d'énergie thermique du flux volumique d'air repris (AB) sortant du système de récupération d'énergie (10), en vue de refroidir le flux volumique d'air repris (AB) au moyen d'un refroidissement adiabatique, et
- l'alimentation du flux volumique d'air repris refroidi (AB) à l'échangeur de chaleur (2) en vue de la transmission de l'énergie thermique pris du circuit de la mémoire (9) au flux volumique d'air repris refroidi (AB).

**5.** Méthode selon la revendication 3 ou 4, **caractérisée par**

- l'alimentation d'énergie thermique au flux volumique d'air frais (ZU) sortant de l'échangeur de chaleur (1) connecté avec le circuit de la mémoire (9) en vue du réchauffage pour le contrôle de l'humidité du flux volumique d'air frais refroidi (ZU) au moyen d'un autre échangeur de chaleur (7) couplé de préférence avec le circuit de gaz chaud de la thermopompe, et
- l'alimentation du flux volumique d'air frais (AB) échauffé à une salle climatisée.

**6.** Méthode selon les revendications 1 à 5, **caractérisée par** la réglage de ce part de l'énergie thermique transmis à l'échangeur de chaleur (1) qui est assigné au flux volumique d'air frais par la commande de la quantité d'écoulement d'une liquide de circuit contenu dans le circuit de la mémoire (9) par l'accumulateur d'énergie (9.1) et l'échangeur de chaleur (1).

**7.** Méthode selon un des revendications 1 à 6, **caractérisée par** un réglage de flux volumique variable du flux volumique d'air repris (AB) et/ou du flux volumique d'air frais /ZU) par les étapes de la procédure suivants

- échange d'énergie thermique dans le flux volumique d'air repris (AB) sortant du système de récupération de chaleur (10) au moyen de l'échangeur de chaleur (2) avec un autre circuit de la mémoire (12) qui contient un autre accumulateur d'énergie (12.1),
- transmission d'une partie de l'énergie thermique extraite du moins au moyen d'un quatrième échangeur de chaleur (13) couplé avec la thermopompe (3) et la thermopompe (3) de l'autre circuit de la mémoire (12) par l'échangeur de chaleur couplé avec le premier circuit de la mémoire (9) qui comporte l'accumulateur d'énergie (9.1), et
- la transmission d'une partie de l'énergie thermique du moins transmise au premier circuit de la mémoire (9) au moyen de l'échangeur de chaleur (1) au flux volumique d'air frais (ZU) sortant du système de récupération de chaleur (10).

**8.** Méthode selon la revendication 7, **caractérisée par**
la réglage de ce part de l'énergie thermique transmis dans l'échangeur de chaleur (2) assigné au flux volumique d'air repris (AB) par la commande de la quantité d'écoulement d'une liquide de circuit comporté au circuit de la mémoire (12) par l'accumulateur d'énergie (12.1) et l'échangeur de chaleur (2).

**9.** Méthode selon les revendications 1 à 8, **caractérisée par** la transmission de l'énergie au moyen de la thermopompe (3) entre le flux volumique d'air frais (ZU) et le flux volumique d'air repris (AB) sans l'application du système de récupération de chaleur (10).

**10.** Appareil pour la récupération d'énergie dans un installation de climat et de la technique d'aération, avec un flux volumique d'air frais (ZU) et un flux volumique d'air repris (AB), au choix avec un système de récupération de chaleur (10) qui connecte entre le flux volumique d'air frais (ZU) et ce d'air repris (AB) en vue du transfert de chaleur, qui comporte un échangeur de chaleur régénératrice ou un échangeur de chaleur de récupération ou un échangeur de chaleur de stockage de masse ou un tuyau de chaleur, et/ou une thermopompe (3), qui est attribuée au système de récupération de chaleur (10) en vue du transport d'énergie au flux volumique d'air frais (ZU) ou au flux volumique d'air repris (AB) et qui est couplé avec le flux volumique d'air frais (ZU) et/ou le flux volumique d'air repris (AB) au moyen des échangeurs de chaleur et/ou une thermopompe (3) qui est couplée avec le flux volumique d'air frais (ZU) et/ou le flux volumique d'air repris (AB) au moyen des échangeurs de chaleur, **caractérisé par** un circuit de la mémoire (9), qui se trouve entre la thermopompe (3) et un échangeur de chaleur (1) qui est disposé en aval le système de récupération de chaleur (10) dans le flux volumique d'air frais (ZU), où le transport de chaleur est réglable dans le circuit de la mémoire (9).

**11.** Appareil selon la revendication 10, **caractérisé par** un échangeur de chaleur (2), qui se trouve dans le flux volumique d'air repris (AB) et qui est couplé avec la thermopompe (3), le circuit de la mémoire (9) couplé avec la thermopompe (3) par un deuxième échangeur de chaleur (4), un accumulateur d'énergie (9.1) qui est couplé avec le circuit de la mémoire (9), l'échangeur de chaleur (1), qui se trouve dans le flux volumique d'air frais (ZU) et qui est couplé avec le circuit de la mémoire (9), et une installation (6) pour le réglage de la température d'air frais du flux volumique d'air frais (ZU), qui contrôle l'écoulement de la liquide de circuit dans le circuit de la mémoire (9) par l'échangeur de chaleur (1) et l'accumulateur d'énergie (9.1).

**12.** Appareil selon la revendication 11, **caractérisé par** l'arrangement du premier échangeur de chaleur (4) comme évaporateur ou liquéfacteur de la thermopompe (3).

**13.** Appareil selon la revendication 11, **caractérisé par** l'arrangement du deuxième échangeur de chaleur (4) comme liquéfacteur ou évaporateur de la thermopompe (3).

**14.** Appareil selon la revendication 11 ou 13, **caractérisé par** un autre circuit de la mémoire (12), qui est couplé avec la thermopompe (3) par un autre échangeur de chaleur (13), un autre accumulateur d'énergie (12.1) qui est couplé dans un autre circuit de la mémoire (12), et une installation(14) au règlement de dégagement d'énergie thermique au flux volumique d'air repris (AB), qui contrôle l'écoulement de la liquide de circuit dans l'autre circuit de la mémoire (12) par l'échangeur de chaleur (13) et l'autre accumulateur d'énergie (12.1), lors d'un réglage variable du flux volumique dans le flux volumique d'air frais (ZU) ou ce d'air repris (AB).

**15.** Appareil selon la revendication 14, **caractérisé par** l'arrangement de l'échangeur de chaleur (13) comme évaporateur ou liquéfacteur de la thermopompe (3).

**16.** Appareil selon les revendications 10 à 14, **caractérisé par** là, que la thermopompe (3) est réglable.

**17.** Appareil selon les revendications 10 à 16, **caractérisé par** une installation pour le refroidissement adiabatique du flux volumique d'air repris (AB) devant l'entrée dans le liquéfacteur de la thermopompe (3) pour améliorer le rendement lors de refroidissement du flux volumique d'air frais (ZU).

**18.** Appareil selon les revendications 10 à 16, **caractérisé par** une installation pour le réchauffage du flux volumique d'air frais (ZU) sortant de l'échangeur de chaleur (1) pour la contrôle de l'humidité du flux volumique d'air frais (ZU) au moyen de l'énergie thermique de la thermopompe alimenté à un échangeur de chaleur (7) qui se trouve dans le flux volumique d'air frais (ZU), de préférence du gaz chaud de la thermopompe (3).

**19.** Appareil selon les revendications 10 à 18, **caractérisé par** une installation pour un chauffage additionnel, où un autre système de chauffage est couplé dans le circuit de la mémoire (9) par un échangeur de chaleur particulier (16).

**20.** Appareil selon la revendication 19, **caractérisé par** l'utilisation d'une installation basé sur la technologie énergétique comme système de chauffage additionnel.

**21.** Appareil selon une ou toutes les revendications 10 à 20, **caractérisé par** l'utilisation de la thermopompe (3) dans la connexion du flux volumique d'air frais (ZU) et du flux volumique d'air repris (AB) sans utilisation d'un système de récupération de chaleur (10).

**22.** Appareil selon une ou toutes les revendications 10 à 20, **caractérisé par** la combinaison de plusieurs appareils de ventilation d'alimentation et d'échappement (17,18) en un seul système de récupération d'énergie, en prévoyant une seule thermopompe (3) et un seul circuit de la mémoire (19) avec un accumulateur d'énergie (19.1).

**23.** Appareil selon une ou toutes les revendications 10 à 20, **caractérisé par** la combinaison de plusieurs appareils de ventilation d'alimentation et d'échappement (17, 18) en un seul système de récupération d'énergie, en prévoyant une seule thermopompe (3), qui est connectée avec deux ou plusieurs circuits de la mémoire (19, 20) chacun avec un accumulateur d'énergie (19.1 ou 20.1) pour la chaleur et un accumulateur d'énergie (19.1 ou 20.1) pour le froid.

**24.** Appareil selon une ou toutes les revendications 14 à 21, **caractérisé par** la combinaison de plusieurs appareils de ventilation d'alimentation et d'échappement (17, 18) en un seul système de récupération d'énergie, en prévoyant une seule thermopompe (3) qui est connectée avec deux ou plusieurs circuits de la mémoire (19, 20) et dans lesquels un accumulateur d'énergie (19.1 respectivement 20.1) est prévu pour la régulation de chaleur ou de froid.

**25.** Appareil selon une ou toutes les revendications 10 à 24, **caractérisé par** la disposition d'un ou plusieurs points de transfert ou dispositifs pour le transport d'énergie thermique, indépendant de la thermopompe, au circuit de la mémoire (19) et/ou à l'accumulateur d'énergie (19.1) et/ou au circuit de la mémoire (20) et/ou à l'accumulateur d'énergie (20.1).

**26.** Appareil selon une ou toutes les revendications 10 à 25, **caractérisé par** le classement d'un liquéfacteur/évaporateur externe à la thermopompe (3).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 9218937 U1
- DE 19500527 A1
- DE 19851889 A1
- EP 0676594 A2
- DE 29706131 U1

**In der Beschreibung aufgeführte Nicht-Patentliteratur**

- **Recknagel ; Sprenger ; Schramek.** Taschenbuch für Heizung + Klimatechnik 01/02. Oldenbourg Industrieverlag, 2001, 1367 ff
- Berechnung und Regelung. Handbuch der Klimatechnik. Verlag, vol. 2, 115 ff